Europäisches Patentamt

European Patent Office

Office européen des brevets

(19)

(11) Veröffentlichungsnummer: **0 144 514 B1**

(12) **EUROPÄISCHE PATENTSCHRIFT**

(45) Veröffentlichungstag der Patentschrift:
**07.01.88**

(51) Int. Cl.⁴: **B 66 C 9/14**

(21) Anmeldenummer: **84109078.0**

(22) Anmeldetag: **01.08.84**

(54) Elektrischer Fahrantrieb für einen Kran oder das Fahrwerk eines Hubwerkes etc.

(30) Priorität: **23.11.83 DE 3342172**

(43) Veröffentlichungstag der Anmeldung:
**19.06.85 Patentblatt 85/25**

(45) Bekanntmachung des Hinweises auf die Patenterteilung:
**07.01.88 Patentblatt 88/1**

(84) Benannte Vertragsstaaten:
**AT BE CH DE FR GB IT LI NL SE**

(56) Entgegenhaltungen:
**DE - A - 1 488 481
DE - B - 1 092 551
DE - C - 560 784
DE - C - 691 893
FR - A - 1 260 639
FR - A - 1 466 692
GB - A - 1 080 894
US - A - 3 627 087**

**Prospekt der FA. "DEMAG", Bauelemente der Antriebstechnik", Nr. 20008584, 6.78**

(73) Patentinhaber: **R. Stahl Fördertechnik GmbH,
Daimlerstrasse, D-7118 Künzelsau (DE)**

(72) Erfinder: **Jäger, Ulf, verstorben, D-7115 Kupferzell (DE)**
Erfinder: **Lung, Johann, Berlichingenweg 1,
D-7118 Künzelsau (DE)**

(74) Vertreter: **Rüger, Rudolf, Dr.-Ing. et al,
Webergasse 3 Postfach 348, D-7300 Esslingen/Neckar
(DE)**

## Beschreibung

Die Erfindung betrifft einen elektrischen Fahrantrieb für einen Kran oder das Fahrwerk eines Hubwerkes usw., mit einem Verschiebeanker-Bremsmotor, dessen Welle drehfest mit einem mit einer gehäusefesten Reibfläche zusammenwirkenden Bremselement verbunden ist, das in Eingriffsrichtung zu der Reibfläche federnd vorgespannt ist und dessen Welle ausserdem drehfest, aber axial verschieblich mit der in einem Getriebegehäuse gelagerten Eintriebs-Ritzelwelle eines angeflanschten Getriebes über eine formschlüssige Verschiebe-Kupplung gekuppelt ist, welche ein auf der Motorwelle unverdrehbar aufgesetztes, innen keilverzahntes Kupplungselement aufweist.

Im Gegensatz zu den Verhältnissen bei einem Hubwerksantrieb wirkt bei einem Fahrantrieb das Lastmoment beim Anfahren und Bremsen in beiden Drehrichtungen. Würde der Verschiebeanker-Bremsmotor eines solchen Fahrantriebes mit einem zur Erzielung grösserer Laufruhe schräg verzahnten Ritzel auf der sich axial verschiebenden Motorwelle ausgestattet, so ergäbe sich in der einen Drehrichtung eine höhere Bremswirkung als in der anderen. In der einen Drehrichtung verstärkt nämlich der von der Schrägverzahnung herrührende Axialschub die Wirkung der die Bremsscheibe belastenden Bremsfeder; in der anderen Drehrichtung hebt er sie teilweise auf. Ein mit einem solchen Antrieb ausgerüstetes Fahrwerk würde also in beiden Fahrtrichtungen unterschiedliche Bremswege aufweisen, was naturgemäss unerwünscht oder unzuverlässig ist.

Um diese Nachteile zu vermeiden, ist bei einem in der Praxis bekannten Fahrantrieb (DE-Prospekt «Bauelemente der Antriebstechnik DEMAG Antriebstechnik» Nr. 2000 8584, 6.78) die Welle des Verschiebeanker-Bremsmotors über eine als Verschiebekupplung ausgebildete formschlüssige Kupplung mit der Welle des schrägverzahnten Ritzels des Getriebes drehfest verbunden, so dass ein von der Schrägverzahnung herrührender Axialschub die Bremswirkung des Bremsmotors nicht beeinflussen kann, sondern von den die Ritzelwelle in dem Getriebegehäuse lagernden Lagern aufgenommen wird.

Bei dem bekannten Fahrantrieb ist die Motorwelle auf der A- und der B-Seite über entsprechende Radial- und Axiallager in Lagerschilden gelagert, die einen Teil des Motorgehäuses bilden und von denen das Lagerschild auf der A-Seite einen Flansch für die Verbindung mit dem Getriebegehäuse aufweist. Da die Eintriebs-Ritzelwelle des Getriebes in dem Getriebegehäuse in eigenen Lagern gelagert ist, muss die Verschiebekupplung zum Ausgleich der unvermeidbaren Fluchtungsfehler bei der Montage des Getriebegehäuses ein gewisses radiales Spiel aufweisen. Die Bremse des Verschiebeanker-Bremsmotors ist in Gestalt einer Konusbremse ausgebildet und auf der B-Seite des Motors angeordnet, wozu die Motorwelle auf der B-Seite entsprechend verlängert ist. Da die Bremsscheibe unmittelbar durch das Lüfterrad gebildet und damit ungekapselt zusammen mit dem Lüfterrad eingebaut ist, kann eine Beeinträchtigung der Bremswirkung durch Umwelteinflüsse beim Betrieb in einer umweltbelasteten Umgebung nicht ausgeschlossen werden. Davon abgesehen ist der Verschiebeanker durch eine einzige koaxial zu der Motorwelle angeordnete Schraubenfeder belastet, bei deren Versagen die Bremse umwirksam wird.

Die Gesamtkonstruktion dieses Fahrantriebs bedingt einen verhältnismässig grossen Platzbedarf und einen beträchtlichen Aufwand hinsichtlich der Lagerung.

Aufgabe der Erfindung ist es deshalb, einen Fahrantrieb für einen Kran bzw. das Fahrwerk eines Hubwerks zu schaffen, der bei in beiden Drehrichtungen gleichem Bremsmoment und geräuscharmer Betriebsweise sich durch geringen Platzbedarf auszeichnet und wirtschaftlich herstellbar ist.

Zur Lösung dieser Aufgabe ist der eingangs genannte Fahrantrieb erfindungsgemäss dadurch gekennzeichnet, dass das auf die Motorwelle aufgesetzte, mittels seiner Innenkeilverzahnung mit der Ritzelwelle drehfest und axial verschieblich gekuppelte Kupplungselement in Gestalt einer die Bremsscheibe tragenden Kupplungsnabe ausgebildet ist und dass die Motorwelle auf der dem Getriebe zugewandten Seite über die Kupplungsnabe radial ausschliesslich auf der Ritzelwelle gelagert ist. Dabei kann die Bremsscheibe gleichzeitig als Schwungscheibe ausgebildet sein, wie dies für eine sanfte Beschleunigung des Fahrwerkes oder Krans von Bedeutung ist.

Die zwischen der Motorwelle und der Ritzelwelle angeordnete Kupplungsnabe, die gleichzeitig die Bremsscheibe trägt, führt zu einem sehr einfachen, billigen und raumsparenden Aufbau des Fahrantriebs. Da die Kupplungsnabe unmittelbar auf der Ritzelwelle des Getriebes gelagert ist, entfallen ein eigenes Lagerschild mit zugeordnetem Lager auf der A-Seite des Verschiebeanker-Motors. Die Bremse ist darüber hinaus von dem Lüfter getrennt untergebracht, so dass sie nicht durch Umwelteinflüsse beeinträchtigt werden kann.

In einer bevorzugten Ausführungsform ist die Bremsscheibe durch eine Anzahl rings um die Drehachse verteilt angeordneter Druckfedern belastet, die gegen ein mit der Bremsscheibe umlaufendes Federwiderlager axial abgestützt sind. Diese Konstruktion gestattet es, die im Einzelfall erforderliche Bremswirkung durch entsprechende Wahl der Zahl der Druckfedern zweckentsprechend zu wählen. Ausserdem kann beim Bruch einer Druckfeder die Bremswirkung nie völlig wegfallen, was eine erhöhte Betriebssicherheit für den ganzen Fahrantrieb bedeutet.

Das Federwiderlager kann zweckmässigerweise eine Ringscheibe sein, die in Achsrichtung gegen die Ritzelwelle abgestützt ist. Dabei kann die Ringscheibe über wenigstens eine Tellerfeder gegen den auf die Ritzelwelle aufgesetzten Innenring eines die Ritzelwelle lagernden Wälzlagers abgestützt sein. Die Tellerfeder hat die Aufgabe, den beim Anziehen des Verschiebeankers auftretenden Schlag aufzufangen. Da sie zwischen der Kupplungsnabe und dem Innenring des Lagers der Ritzelwelle angeordnet ist und diese Teile keine Relativdrehbewegung zueinander ausführen, tritt an der Tellerfeder kein Abrieb auf. Gleichzeitig ist auch eine unerwünschte Geräusch- und Wärmeentwicklung an dieser Stelle ausgeschlossen.

Die Reibfläche ist mit Vorteil eben, wobei sie mit der Bremsscheibe eine Flachbremse bildet, die gegenüber einer Konusbremse den Vorteil geringerer Geräuschentwicklung aufweist. Ausserdem ist eine solche Flachbremse wartungsarm, da sie nicht nachgestellt werden muss.

Die Reibfläche ist zweckmässigerweise an einem mit dem Motorgehäuse verbundenen Flansch angeordnet, an dem das Getriebegehäuse angeflanscht ist und der gleichzeitig die Bremse und die Kupplungsnabe nach aussen zu abschirmt. Dabei können das Motorgehäuse, der Flansch und der angeflanschte Teil des Getriebegehäuses explosionsgeschützt ausgebildet sein. Da bei dem neuen Fahrantrieb die Druckfedern der Bremse und deren Tellerfeder an der Kupplungsnabe und nicht an aus dem EX-Raum austretenden Wellenstummeln untergebracht sind, ist die explosionsgeschützte Ausbildung des Fahrantriebs konstruktiv verhältnismässig einfach. Die Kupplungsnabe mit der Bremsscheibe und den Druckfedern der Bremse können im wesentlichen ungeändert für die explosionsgeschützte Ausführung verwendet werden.

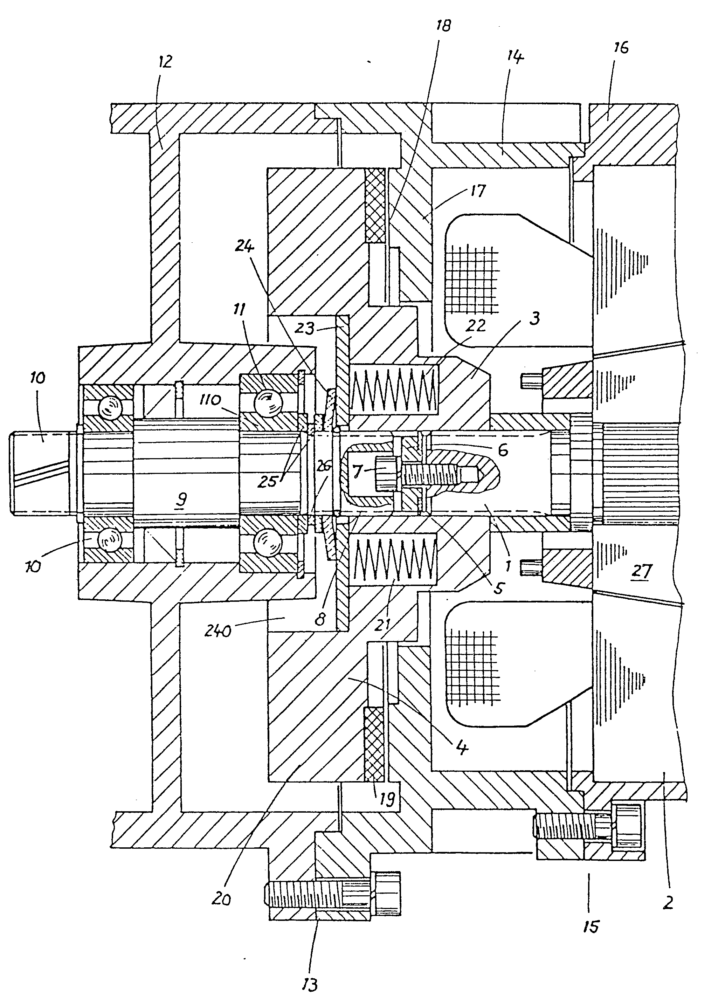

In der Zeichnung ist ein Ausführungsbeispiel des Gegenstandes der Erfindung dargestellt. Die Figur zeigt einen Fahrantrieb gemäss der Erfindung, im axialen Schnitt, in einer Seitenansicht und in einem Ausschnitt.

Auf das keilverzahnte A-seitige Ende der Welle 1 eines Verschiebeanker-Motors 2 ist eine Kupplungsnabe 3 drehfest aufgepresst, die eine einstückig an ihr angeformte ebene Bremsscheibe 4 aufweist. Die Kupplungsnabe 3 ist auf der Motorwelle 1 durch einen Sicherungsring 5, eine Ringscheibe 6 und eine Innensechskantschraube 7 gesichert.

Innen ist die Kupplungsnabe mit einer achsparallelen Vielkeilverzahnung 8 ausgebildet, mit der sie axial verschieblich, aber drehfest auf dem entsprechend vielkeilverzahnten Ende der Welle 9 eines Eintriebs-Ritzels 10 eines in seinen weiteren Einzelheiten nicht weiter dargestellten Getriebes radial gelagert ist. Die Ritzelwelle 9 ist mittels zweier Kugellager 11, 11 in einem in der Zeichnung im Ausschnitt dargestellten Getriebegehäuse 12 gelagert, das bei 13 an einen Flansch 14 angeflanscht ist, der seinerseits bei 15 zentriert unmittelbar an das Gehäuse 15 des Verschiebeanker-Motors 2 angeschlossen ist.

Damit ist die Motorwelle 1 über die Kupplungsnabe 3 A-seitig lediglich auf der Ritzelwelle 9 radial gelagert, die ihrerseits durch die Kugellager 11, 11 in dem Getriebegehäuse 12 gelagert ist.

An einem radial nach innen ragenden ebenen Wandungsteil 17 des Flansches 14 ist eine ebene ringförmige Reibfläche 18 ausgebildet, mit der ein auf die Bremsscheibe 4 aufgeklebter Bremsbelag 19 zusammenwirkt. Die Bremsscheibe 4 bildet somit, gemeinsam mit der Reibfläche 18, eine Flachbremse. Der Betriebsmässig auftretende Abtrieb des Bremsbelages 19 erfordert kein Nachjustieren der Bremse, da die Abtriebstrecke gleich gross wie die Änderung des Lüftungsweges ist. Da die Bremse eine grosse Reibfläche 18 aufweist, ändert sich der Verschiebeweg nur geringfügig, so dass die von dem Verschiebeanker-Motor 2 ausgeübte axiale Verschiebekraft immer zur Bremslüftung ausreicht. Ausserdem ist die Flachbremse im Betrieb geräuscharm.

Die Bremsscheibe 4 weist bei 20 einen angeformten massiven Ring auf, durch den ihre Schwungmasse vergrössert wird, so dass sie gleichzeitig als Schwungrad wirkt, wie dies für den sanften Anlauf des Fahrantriebs erwünscht ist.

In der Kupplungsnabe 3 sind rings um die Drehachse verteilt in gleichen radialen Abständen angeordnete Axialbohrungen 21 vorgesehen, von denen jede eine Druckfeder 22 aufnimmt, die einenends gegen den Boden der zugeordneten Axialbohrung 21 und anderenends gegen ein Federwiderlager in Gestalt einer Ringscheibe 23 abgestützt ist, die ihrerseits lose in eine entsprechende Ausdrehung 240 der Bremsscheibe 4 eingesetzt ist.

Die Ringscheibe 23 ist axial gegen eine auf die Ritzelwelle 9 aufgesetzte Tellerfeder 24 abgestützt, an die sich in Achsrichtung zwei Stützscheiben 25 mit einem dazwischen angeordneten Sicherungsring 26 anschliessen. Über die beiden Stützscheiben 25 und den Sicherungsring 26 sowie die Tellerfeder 24 ist die Ringscheibe 23 gegen den Innenring 110 des innenliegenden Kugellagers 11 der Ritzelwelle 9 abgestützt. Die Tellerfeder 24 hat dabei die Aufgabe, den beim Anziehen des Verschiebeankers 27 auftretenden Schlag elastisch aufzufangen. Sie führt keine Relativdrehbewegung relativ zu der Ringscheibe 23 aus, die ihrerseits gemeinsam mit der Bremsscheibe 4 und der Kupplungsnabe 3 umläuft, so dass auch die Druckfedern 22 keinem Abrieb unterliegen.

Bei von der Motorwelle 1 angetriebener Ritzelwelle 9 ist der Verschiebeanker 27 in der in der Figur dargestellten Stellung gehalten, in der die Bremsscheibe 4 gegen die Wirkung der Druckfedern 22 nach links verschoben ist, so dass der Bremsbelag 19 von der Reibfläche 18 abgehoben ist. Sowie der Verschiebeanker-Motor 2 vom Netz abgeschaltet wird, können die Druckfedern 22 die Kupplungsnabe 3, bezogen auf die Figur, nach rechts verschieben und den Bremsbelag 19 mit der Reibfläche 18 in Eingriff bringen, womit die Ritzelwelle 9 und die Motorwelle 1 abgebremst werden.

Die Zahl der als Bremsfedern wirkenden Druckfedern 22 kann entsprechend der für den jeweiligen Einsatzfall erforderlichen Bremswirkung verändert werden. Sollte eine der Federn versagen, so reichen die verbleibenden Druckfedern 22 aus, um eine einwandfreie Stillsetzung des Fahrantriebs zu gewährleisten.

Der Fahrantrieb kann ohne weiteres explosionsgeschützt ausgebildet werden, weil das Getriebegehäuse 12, der Flansch 14 und das Motorgehäuse 16 ohnehin bereits einen druckfest gekapselten Raum abschliessen, in dem die Bremse und die Kupplungsnabe 3 enthalten sind, und aus dem lediglich die Ritzelwelle 9 nach aussen führt, die mit einer sogenannten EX-Strecke versehen werden muss, wie dies den einschlägigen Vorschriften entspricht.

**Patentansprüche**

1. Elektrischer Fahrantrieb für einen Kran oder das Fahrwerk eines Hubwerkes usw. mit einem Verschiebeanker-Bremsmotor (2), dessen Welle (1) drehfest mit einem mit einer gehäusefesten Reibfläche (18) zusammenwirkenden Bremselement verbunden ist, das in Eingriffsrichtung zu der Reibfläche federnd vorgespannt ist und dessen Welle ausserdem drehfest, aber axial verschieblich mit der in einem Getriebegehäuse (12) gelagerten Eintriebs-Ritzelwelle (9) eines angeflanschten Getriebes über eine formschlüssige Verschiebe-Kupplung gekuppelt ist, welche ein auf die Motorwelle unverdrehbar aufgesetztes, innen keilverzahntes Kupplungselement aufweist, dadurch gekennzeichnet, dass das auf die Motorwelle (1) aufgesetzte, mittels seiner Innenkeilverzahnung (8) mit der Ritzelwelle (5) drehfest und axial verschieblich gekuppelte Kupplungselement in Gestalt einer die Bremsscheibe (4) tragenden Kupplungsnabe (3) ausgebildet ist und dass die Motorwelle (1) auf der dem Getriebe zugewandten Seite über die Kupplungsnabe (3) radial ausschliesslich auf der Ritzelwelle (9) gelagert ist.

2. Fahrantrieb nach Anspruch 1, dadurch gekennzeichnet, dass die Bremsscheibe (4) als Schwungscheibe ausgebildet ist.

3. Fahrantrieb nach einem der vorhergehenden Ansprüche, dadurch gekennzeichnet, dass die Bremsscheibe (4) durch eine Anzahl rings um die Drehachse verteilt angeordneter Druckfeder (22) belastet ist, die gegen ein mit der Bremsscheibe (4) umlaufendes Federwiderlager (23) axial abgestützt sind.

4. Fahrantrieb nach Anspruch 3, dadurch gekennzeichnet, dass das Federwiderlager eine Ringscheibe (23) ist, die in Achsrichtung gegen die Ritzelwelle (9) abgestützt ist.

5. Fahrantrieb nach Anspruch 4, dadurch gekennzeichnet, dass die Ringscheibe (23) über wenigstens eine Tellerfeder (24) gegen den auf die Ritzelwelle (9) aufgesetzten Innenring (110) eines die Ritzelwelle (9) lagernden Wälzlagers (11) abgestützt ist.

6. Fahrantrieb nach einem der vorhergehenden Ansprüche, dadurch gekennzeichnet, dass die Reibfläche (18) eben ist und mit der Bremsscheibe (4) eine Flachbremse bildet.

7. Fahrantrieb nach einem der vorhergehenden Ansprüche, dadurch gekennzeichnet, dass die Reibfläche an einem mit dem Motorgehäuse (16) verbundenen Flansch (14) angeordnet ist, an dem das Getriebegehäuse (12) angeflanscht ist.

8. Fahrantrieb nach Anspruch 7, dadurch gekennzeichnet, dass das Motorgehäuse (16), der Flansch (14) und der angeflanschte Teil des Getriebegehäuses (9) explosionsgeschützt ausgebildet sind.

**Claims**

1. An electric travelling mechanism for a crane or the travelling mechanism of lifting gear or the like, having a sliding-rotor brake motor (2) whose shaft (1) is connected fast for rotation to a brake element which cooperates with a friction surface (18) rigidly connected to the casing and is resiliently prestressed towards the friction surface in the engagement direction and whose shaft is also coupled fast for rotation but axially displaceably to the input pinion shaft (9), mounted in a transmission casing (12) of a flanged-on transmission via a positive sliding clutch having an internally splined clutch element fitted non-rotatably on the motor shaft, characterized in that the clutch element fitted on the motor shaft (1) and coupled fast for rotation and axially displaceably to the pinion shaft (5) via its internal splining (8) is constructed in the form of a clutch hub (3) bearing the brake disc (4), and the motor shaft (1) is mounted on the side adjacent the transmission radially via the clutch hub (3) exclusively on the pinion shaft (9).

2. A travelling mechanism according to Claim 1, characterized in that the brake disc (4) takes the form of a disc flywheel.

3. A travelling mechanism according to one of the preceding Claims, characterized in that the brake disc (4) is loaded by a number of compression springs (22) which are arranged distributed in a circle around the axis of rotation and bear axially against a spring abutment (23) rotating with the brake disc (4).

4. A travelling mechanism according to Claim 3, characterized in that the spring abutment is an annular disc (23) which bears in the axial direction against the pinion shaft (9).

5. A travelling mechanism according to Claim 4, characterized in that the annular disc (23) bears via at least one cup spring (24) against the inner ring (110) fitted on the pinion shaft (9) of an antifriction bearing (11) bearing the pinion shaft (9).

6. A travelling mechanism according to one of the preceding Claims, characterized in that the friction surface (18) is flat and cooperates with the brake disc (4) to form a flat brake.

7. A travelling mechanism according to one of the preceding Claims, characterized in that the friction surface is disposed on a flange (14) which is connected to the motor casing (16) and to which the transmission casing (12) is flanged.

8. A travelling mechanism according to Claim 7 characterized in that the motor casing (16), the flange (14) and the flanged-on part of the transmission casing (9) are constructed explosionproof.

**Revendications**

1. Mécanisme de translation électrique pour une grue ou le train de roulement d'un dispositif de levage, etc., comprenant un moteur-frein à rotor coulissant (2) dont l'arbre (1) est raccordé, solidairement en rotation, à un élément de freinage qui, coopérant avec une surface de frottement (18) solidaire du carter, est précontraint élastiquement dans le sens de l'engagement par rapport à la surface de frottement et dont l'arbre est, par ailleurs, accouplé solidairement en rotation, mais déplaçable axialement, à l'arbre de pignon d'entrée (9), monté dans un carter (12), d'un train d'engrenages fixé par bride, par un accouplement coulissant à clabot qui comporte un élément d'accouplement à cannelures internes monté résistant à la torsion sur l'arbre du moteur, caractérisé par le fait que l'élément d'accouplement, monté sur l'arbre (1) du moteur et raccordé, déplaçable axialement et solidairement en rotation, à l'arbre de pignon (5) au moyen de ses cannelures internes (8), est réalisé sous la forme d'un moyeu d'accouplement (3) portant le disque de frein (4), et que l'arbre (1) du moteur, du côté tourné vers le train d'engrenages, est monté radialement exclusivement sur l'arbre de pignon (9) par l'intermédiaire du moyen d'accouplement (3).

2. Mécanisme de translation selon la revendication 1, caractérisé par le fait que le disque de frein (4) est réalisé sous la forme d'un volant.

3. Mécanisme de translation selon l'une des revendications précédentes, caractérisé par le fait que le disque de frein (4) est sollicité par plusieurs ressorts de pression (22) qui sont répartis tout autour de l'axe de rotation et qui prennent appui axialement contre une butée élastique (23) tournant avec le disque de frein (4).

4. Mécanisme de translation selon la revendication 3, caractérisé par le fait que la butée élastique est un disque annulaire (23) qui s'appuie dans le sens axial contre l'arbre de pignon (9).

5. Mécanisme de translation selon la revendication 4, caractérisé par le fait que le disque annulaire (23) prend appui, par l'intermédiaire d'au moins une rondelle Belleville (24), sur la bague intérieure (110), montée sur l'arbre de pignon (9), d'un roulement (11) soutenant l'arbre de pignon (9).

6. Mécanisme de translation selon l'une des revendications précédentes, caractérisé par le fait que la surface de forttement (18) est plane et forme un frein plat avec le disque de frein (4).

7. Mécanisme de translation selon l'une des revendications précédentes, caractérisé par le fait que la surface de frottement est installée sur une bride (14) qui est raccordée à la carcasse (16) du moteur et sur laquelle est fixé le carter (12).

8. Mécanisme de translation selon la revendication 7, caractérisé par le fait que la carcasse (16) du moteur, la bride (14) et la partie, fixée par bride, du carter (9), sont réalisées antidéflagrantes.